Europäisches Patentamt

European Patent Office

Office européen des brevets

(19)

(11) Publication number: **0 191 003**
A1

(12) **EUROPEAN PATENT APPLICATION**

(21) Application number: **86850015.8**

(22) Date of filing: **22.01.86**

(51) Int. Cl.⁴: **C 09 J 7/02**
**C 08 J 9/36**

(30) Priority: **28.01.85 SE 8500386**

(43) Date of publication of application:
**13.08.86 Bulletin 86/33**

(84) Designated Contracting States:
**CH DE FR GB IT LI NL**

(71) Applicant: **FAGERDALA INDUSTRI AB**

**S-139 00 Värmdö(SE)**

(72) Inventor: **Landvik, Dag**
**Skgovaktarvägen 12**
**S-131 50 Saltsjö-Duvnäs(SE)**

(74) Representative: **Stürmer, Gerhard et al,**
**AWAPATENT AB Box 7402**
**S-103 91 Stockholm(SE)**

(54) A method of making longitudinally cut pressure sensitive sealing strips and the like.

(57) The invention relates to a method of making longitudinally cut pressure sensitive sealing strips, and to strips of cellular material, produced in accordance with this method. The object of the invention is to prevent, without resorting to a loosely applied protective material, permanent adhesion between the glue-coated surface of the sealing material and its reverse side when the material is rolled up.

This is achieved, in accordance with the invention, in that, before the pressure sensitive glue is applied to one side of said cellular material, the other side of the material is surface-treated, preferably coronatreated, and then is coated with a release agent, preferably silicone.

EP 0 191 003 A1

# A METHOD OF MAKING LONGITUDINALLY CUT PRESSURE

## SENSITIVE SEALING STRIPS AND THE LIKE

The present invention relates to a method in the manufacture of longitudinally cut pressure sensitive sealing strips of flexible, foamed material, preferably cellular polyethylene, and to an insulating or sealing strip thus manufactured.

Sealing strips of this type are manufactured for example by cutting a prefabricated web of material having a given thickness to the desired width. Cutting may be effected either by slicing the rolled-up web of material by means of a heavy knife or other cutting device, or by rolling over the web from an unrolling location to a rolling-up device, while at the same time conducting the web past one or more knives or other suitable cutting devices.

To prevent the side which is coated with pressure sensitive glue, from permanently sticking to the other side during the rolling operation, it is previously known to provide on the glue-coated side a removable protective material of, for example, paper or the like which has been treated with a release agent, for example silicone, so that the release paper may be readily stripped from the pressure sensitive glue upon mounting of the sealing strip.

Such sealing strips are widely used and function satisfactorily. Nevertheless, they could be further improved in some respects. First of all, removing the loosely applied release material upon mounting of the strip is time-consuming. Moreover, if the rolled-up web has a release agent-treated material loosely applied to the pressure sensitive surface, the web, after being cut into rolls of smaller widths, may tend to fall apart like a serpentine because the reverse side of the material treated with e.g. silicone exhibits very low friction against the side of the sealing material which is not pressure sensitive in the rolled-up state, whereby the different turns of the roll may be dislocated relative to one another.

In order to avoid this serpentine effect which occurs especially in narrow strips, and in order to provide for quicker mounting of the strips, it has been endeavoured to fixedly apply to that side of the sealing material which is not coated with pressure sensitive glue, a plastic film treated with e.g. silicone. By this technique, the release between the pressure sensitive surface and the reverse side of the material which is coated with a plastic film treated with e.g. silicone, has been achieved automatically, simultaneously as one still has a certain adhesion so that the roll does not fall apart during handling. However, an unexpanded plastic film treated with silicone and fixedly applied in this manner suffers from the disadvantage that its surface will not have the desired flexibility and suppleness. If the material is compressed at one point or bent, creases are formed in the film, thus detracting from the sealing ability.

The present invention aims at providing a practical and inexpensive sealing strip which can be quickly and smoothly mounted, while at the same time retaining the valuable characteristics of prior art sealing strips.

To this end, use is made, according to the present invention, of a special surface treatment such as it has been defined in claim 1.

Furthermore, the present invention proposes a sealing strip thus produced and consisting of flexible cellular material, preferably foamed rubber or cellular polyethylene, one side of which carries a layer of pressure sensitive glue, and the other side of which has been treated with a silicone composition or other release agent preventing adhesion to the pressure sensitive glue when the web of material is rolled up, in accordance with the definitions stated in claim 6.

Further developments and embodiments of the invention will appear from the subclaims.

It is previously known in and per se in other contexts to subject plastic webs to surface treatment in order to achieve various effects, int. al. in order to facilitate adhesion of certain applied compositions. Thus, plastic films have previously been surface-treated to make the surface more readily accessible to subsequent processing or further treatment. For example, it is already known from US-A-1,416,357 to treat surfaces with a primer, by flame treatment, or by so-called corona treatment. The corona treatment of polyethylene film, for instance before an advertising text is printed thereon, is also known. Corona treatment implies that different materials are subjected to electric sparks upon discharge of static electricity, it being assumed that molecular particles are formed on the surface which thus may be further treated with printing inks, glue or the like. A chemical bond with the material is thus obtained, and a durable adhesion can be established, also with materials having mutually different physical characteristics.

Furthermore, it is previously known in various contexts to treat different surfaces with a release agent to prevent adhesion, especially adhesion to pressure sensitive glue, in which cases silicone treatment is frequently resorted to (see for example DE-A-2,254,422).

By combining the two above-mentioned techniques - surface treatment to promote adhesion and release agent treatment - there is obtained the combined effect that the previously required protective material, the removal of which often is time-consuming, need no longer be used. In this manner, production is both simplified and made less expensive, and furthermore the use and, not least, the handling of the material is facilitated. One also obtains the effect that rolled-up sealing strips made in accordance with the present invention are held together by the limited adhesion which still occurs between, for example, the silicone treated surface and the pressure sensitive surface, whereby the earlier undesired serpentine effect has been eliminated. In this manner, the rolls are not only safely held together; it is also possible to manufacture larger rolls than before, and these rolls will still be held together.

The novel technique in producing the said sealing strips may be applied both when the expanded cellular plastic web, preferably a cellular polyethylene web which may have a thickness of, for example, between 1 and 4 mm and a width of 1,000 to 2,000 mm, after rolling-up is cut into narrower rolls by means of a single large circular knife, and when the web is continuously divided by smaller knives or other cutting devices and the resulting cut strips are wound up on so-called bobbins in very large lengths, whereby a larger number of turns can be rolled up while the bobbin is travelling laterally back and forth.

## CLAIMS

1. Use of a surface treatment to facilitate adhesion of a release agent in the production of longitudinally cut pressure sensitive sealing or insulating strips of flexible cellular material, preferably a cellular polyethylene web, one side of said cellular material being coated with a pressure sensitive glue and then further worked into rolls, the other side of said cellular material being surface-treated, preferably before the pressure sensitive glue is applied to said one side of said material, to promote adhesion of the release agent, said release agent being applied to said other side.

2. Use as claimed in claim 1, c h a r a c t e r - i s e d  in that the surface treatment is a so-called corona treatment.

3. Use as claimed in claim 1, c h a r a c t e r - i s e d  in that said surface treatment is a so-called flame treatment.

4. Use as claimed in claim 1, c h a r a c t e r - i s e d  in that said surface treatment is a treatment with a primer.

5. Use as claimed in one or more of the preceding claims, c h a r a c t e r i s e d  in that said release agent consists of silicone.

6. A sealing strip of flexible cellular material, one side of which carries a pressure sensitive glue, while the other side is provided with a release agent preventing permanent adhesion to the pressure sensitive glue on the other side when said strip material is rolled up or unrolled, c h a r a c t e r i s e d  in that the side which is not provided with pressure sensitive glue, has been surface-treated to promote adhesion of the release agent.

7. A sealing strip as claimed in claim 6, c h a - r a c t e r i s e d  in that the side which is not provided with pressure sensitive glue, has been corona-treated, flame-treated or treated with a primer.

8. A sealing strip as claimed in claim 6 or 7, c h a r a c t e r i s e d  in that the side which is not provided with pressure sensitive glue, preferably is corona-treated and then coated with silicone.

9. A sealing strip of cellular polyethylene as claimed in one or more of claims 6-7, c h a r a c - t e r i s e d  in that said sealing strip material after surface treatment and silicone treatment and after being rolled-up is cut into narrow rolls having the same width as the width of the strip.

**0191003**

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | EP-A-0 129 809  (BEIERSDORF)  * Abstract; page 7, paragraph 1; page 12, lines 11-16 * | 1,2,4, 6-9 | C 09 J    7/02 C 08 J    9/36 |
| Y | EP-A-0 096 841  (MANULI AUTOADESIVI S.p.A.) * Claims * | 1,6 | |
| A | | 2,3,7 | |
| Y | FR-A-2 336 458  (R.J. GUGLIELMO, Sr.) | 1,6 | |
| A | | 4 | |
| A,D | DE-A-2 254 422  (J.O. OLSSON) | | TECHNICAL FIELDS SEARCHED (Int. Cl.4) |
| | ----- | | C 09 J C 08 J |

The present search report has been drawn up for all claims

| Place of search | Date of completion of the search | Examiner |
|---|---|---|
| THE HAGUE | 16-05-1986 | GIRARD Y.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82